# EUROPEAN PATENT APPLICATION

(11) **EP 0 533 205 A1**
(43) Date of publication of application: **24.03.1993**
(21) Application number: 92116127.9
(22) Date of filing: 21.09.1992
(51) Int. Cl.: C02F 1/28

(54) **A solid composition and a method for removing pollutants in solution from an aqueous medium**

(30) Priority: 20.09.1991 IT MI912506
(71) Applicant: SCAVITER S.a.s. di BENEDETTI CLEMENTE & C., I-54100 Massa (IT); Celsi, Stelvio, I-54033 Carrara (Massa) (IT); Donelli, Ofaldo Alberto, I-54031 Carrara (Massa) (IT)
(72) Inventor: Celsi, Stelvio, I-54033 Carrara (Massa) (IT); Donelli, Ofaldo Alberto, I-54031 Carrara (Massa) (IT)
(74) Representative: Vannini, Torquato

(57) **Abstract**

A solid composition for removing pollutants such as heavy metals, surfactants, phenols, etc. from an aqueous medium which contains them and for subsequently rendering them inert comprises partially dried rock slurry and possibly granite chips with a particle size of between 2 and 6 mm.

## Description

The present invention relates to a solid composition and to a method for removing pollutants in solution from an aqueous medium which contains them.

In the description below and in the following claims, the term "aqueous medium" is intended to indicate any flow, current or stream of water including one or more pollutants in solution, such as, for example, liquid effluents from purification plants, discharges from industrial operations, for example, those coming from tanneries, water leaching from slag, etc.

The term "pollutants", on the other hand, is intended to indicate any compound which is toxic to man, plants or animals such as, for example, heavy metals, such as lead, cadmium, chromium, nickel, copper, zinc, etc., arsenic, phenols and acid-based organic compounds as well as pollutants such as phosphates, surfactants, etc.

As is known, in the field of the treatment of water and/or solid refuse classed as toxic-harmful, one of the most difficult problems to solve is that of removing the pollutants they contain and subsequently transforming these into inert compounds.

Although the water-treatment processes and techniques used up to now can remove the pollutants present more or less easily, they have the disadvantage, which is almost impossible to eliminate, that, as byproducts of the purification treatment, they generate sludges which are in turn classified as toxic-harmful waste since they incorporate pollutants.

In fact, these sludges cannot retain the pollutants incorporated therein in a stable manner and therefore tend to release them with time and under the leaching effect of rainwater.

As a result, the sludges have to be stored in dumps which are rigorously controlled and which can prevent the escape of any liquid from their beds in the long term.

There is a similar containment problem with percolates resulting from the leaching effect of rainwater on blast-furnace slag which tends to release heavy metals, particularly chromium, molybdenum and other metals used in steel-alloying processes.

In this case, the problem is aggravated by the enormous quantities of slag produced which amount to around several tons/day for a foundry of medium size.

At present, the problem of storing this slag in an ecologically safe manner and, in particular, of transforming it into inert compounds, is a problem for which a satisfactory solution has not been found.

The technical problem upon which the present invention is based is therefore to provide a solid composition which enables pollutants in solution to be removed from an aqueous medium which contains them and subsequently to be rendered inert.

According to the invention, this problem is solved by a solid composition which is characterised in that it includes partially dried rock slurry with a moisture content of between 14 and 16% by weight.

In the following description and in the subsequent claims, the term "rock slurry" is intended to indicate the residues produced by the cutting and polishing of marble and granite.

These residues are generally in the form of aqueous suspensions of marble and/or granite dust which is discharged from the sawmills with a water content of between 24 and 28% by weight.

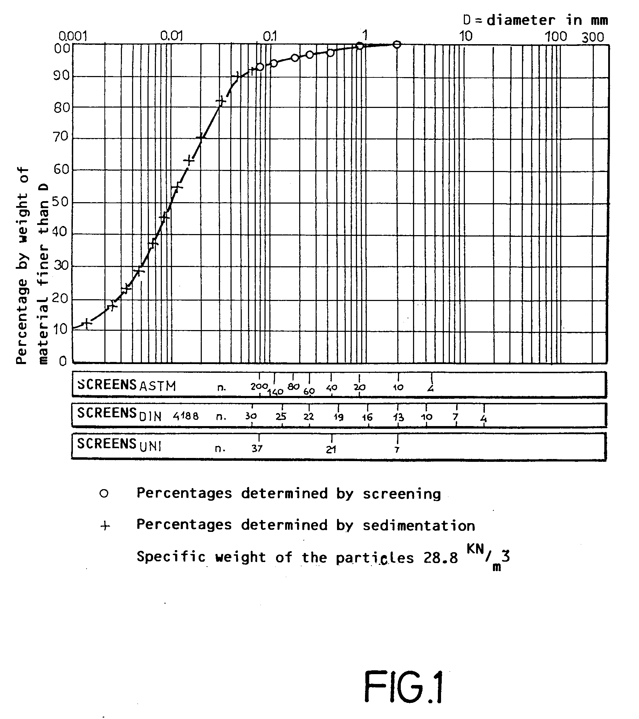

The chemical composition of 3 different types of rock slurry resulting from the cutting of Carrara marble and granite is given in Table 1 below and Figure 1 shows a curve of the particle-sizes of rock slurry produced by the cutting of Carrara marble and a South American granite.

**TABLE 1**

| | MARBLE | GRANITE 1 | GRANITE 2 |
|---|---|---|---|
| CO₂ | 43 | 0.07 | 2.14 |
| Na₂O | 0 | 2.66 | 2.79 |
| MgO | 1.23 | 0.46 | 0.40 |
| Al₂O₃ | 0.07 | 10.90 | 11.03 |
| SiO₂ | 0.21 | 61.60 | 62.18 |
| K₂O | 0.02 | 4.14 | 0.07 |
| CaO | 55.17 | 9.42 | 3.97 |
| TiO₂ | 0 | 0.22 | 0.19 |
| MnO | 0.06 | 0.13 | 0.12 |
| Fe₂O₃ | 0.00 | 9.69 | 11.57 |

It has unexpectedly been found that the solid composition of the present invention is not only able effectively to remove pollutants in solution from an aqueous medium which contains them but can also retain the removed pollutants in a stable manner to produce a substantially inert solid residue.

For the purposes of the invention, the rock slurry is subjected to a partial drying treatment to reduce its moisture content to a value of between 14 and 16% by weight.

The partial drying may be carried out by depositing the rock slurry in layers 20-30 centimetres thick as it is produced by plants for sawing or polishing marble or granite, and then leaving the layers to dry slowly in air.

The drying time is determined by hygrometric measurements of the moisture in the rock slurry in order to stop this step when the desired moisture value is reached.

In order to accelerate the drying operations which take from 15 to 20 days in the open air, the rock slurry may be partially dried in sheds aerated by fans, reducing the time required to 4 days.

Although the mechanism of the action of the solid composition of the present invention has not been fully explained, it is thought that the removal and subsequent retention of the pollutants can be attributed to complex chemico-physico phenomena including the formation of insoluble carbonates and hydroxides and their subsequent co-precipitation, as well as to adsorption phenomena.

According to a further characteristic of the present invention, a method is provided for removing pollutants in solution from an aqueous medium which contains them, characterised in that it includes the step of placing the aqueous medium in intimate contact with the solid composition defined above for a predetermined period of time.

To advantage, the intimate contact between the aqueous medium and the solid composition is brought about by arranging the latter in the form of a granular bed; the aqueous medium is then percolated through it to produce a filtrate which is substantially free of pollutants, and a substantially inert solid residue.

It has been found that, in order to achieve the desired effect of the removal and retention of the pollutants, the rate at which the aqueous medium passes through the granular bed should not exceed 0.01 cm/s. At faster rates, there is in fact a progressive decrease in the retention capacity of the granular bed and it is necessary to recycle the percolate.

According to a further embodiment of the present invention, in order to regulate the permeability of the granular bed to optimal values so as to keep the rate of percolation below the aforementioned value, quantities of granite chips which may vary between 0 and 80% of the total weight of the solid composition may be added to the partially dried rock slurry.

In fact, it has unexpectedly been found that, like the rock slurry, the granite chips can also give rise to the complex chemico-physico phenomena of the removal and retention of the pollutants.

The granite chips of the present invention preferably have a particle size of between 2 and 6 mm and may be produced from waste material from the working of granite, by conventional grinding and screening operations.

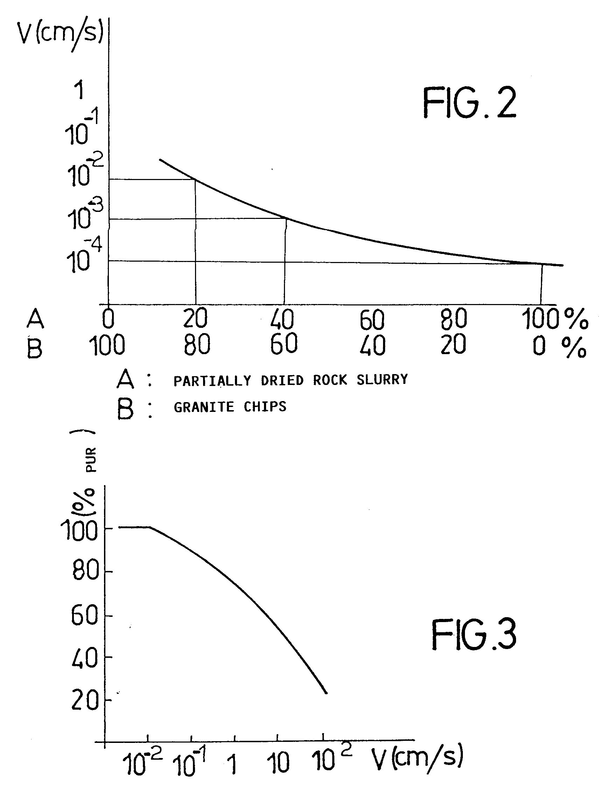

The appended Figures 2 and 3 show, respectively, a curve of the rate of percolation through the granular bed as a function of the % of rock slurry and of granite chips and a curve of the removal capacity of the granular bed as a function of the aforesaid rate.

According to a further embodiment, as well as altering the relative proportions of dried rock slurry and granite chips, it is also possible to vary the permeability of the granular bed by adding bentonite in a proportion of 1-2% of the total weight of the composition.

It has been observed that the removal and retention of the pollutants can be boosted by the pH of the solid composition, of which the optimal value should be less than 12, preferably between 8 and 9.

The granular bed produced by the mixing of partially dried rock slurry and granite chips in known manner may be placed in suitable reactors or at the bottom of a dump if the aqueous medium to be treated is the percolate resulting from the action of rainwater and/or from the decomposition of waste present in the dump.

It has been found from tests carried out that it is possible to remove at least 40 g of pollutants per kg of solid composition.

When the removal of the pollutants is to be effected continuously, an analysis of the percolate will enable the saturation point of the granular bed, and hence the moment at which the granular bed can no longer remove further pollutants, to be determined.

The intimate contact between the aqueous medium and the solid composition may also be achieved by keeping the particles of the solid composition in suspension in the aqueous medium, for example, with the use of conventional fluid-bed equipment or with a stirrer.

In this case, the period of contact between the aqueous medium and the solid composition is regulated in each individual case until the pollutants have completely disappeared.

Further characteristics and advantages of the present invention will become clearer from the following examples, which are given by way of indication and are non-limiting.

### EXAMPLE 1

### Preparation of a solid composition according to the present invention.

3000kg of granite slurry resulting from cutting operations on South American granite and having a moisture content of 28% by weight were arranged in a layer about 25 cm thick in an aerated shed with a total surface area of 6 mq.

Within four days, the moisture content of the rock slurry fell to 15% by weight and their pH value fell to 8.5. The rock slurry produced showed the following composition upon analysis:

| | |
|---|---|
| CO₂ | from 0.00 to 2.50 |
| Na₂O | 2.70 |
| MgO | from 0.40 to 0.50 |
| Al₂O₃ | from 10.0 to 11.0 |
| SiO₂ | from 61.00 to 80.00 |
| K₂O | from 0.00 to 4.50 |
| CaO | from 3.00 to 10.00 |
| Fe₂O₃ | 10.00 |
| Cr₂O₃ | 0.03 |
| TiO₂ | 0.20 |
| MnO | 0.080 |

The partially dried rock slurry produced was then mixed homogeneously with 30 kg of Geobent bentonite (Laviosa).

Upon completion of the mixing operation, the following composition was obtained:

| | |
|---|---|
| rock slurry | 99% |
| bentonite | 1% |

with an overall moisture content of about 15% by weight.

### EXAMPLE 2

A cylindrical column with a cross-section of 1 cm² was filled with the solid composition described in Example 1 above to produce a granular bed with a total depth of 25 cm.

A solution was passed through the granular bed thus obtained and contained:

| | |
|---|---|
| Cr⁶⁺ | 5000 µg |
| Cu⁺⁺ | 5000 µg |
| Pb⁺⁺ | 500 µg |
| Cd⁺⁺ | 50 µg |

A percolation rate of about 100 cm² per week was obtained.

Atomic absorption analysis of the percolate confirmed the following metal concentrations:

| | |
|---|---|
| Cr³⁺ | 0.4 µg |
| Cu⁺⁺ | 4.9 µg |
| Pb⁺⁺ | 0.06 µg |
| Cd⁺⁺ | 0.01 µg |

### EXAMPLE 3

A cylindrical column with a cross-section of 3.14 cm² was filled to a depth of 25 cm with a solid composition including:
25% by weight of partially dried rock slurry and 75% by weight of granite chips having a particle size of between 2 and 6 mm and the following composition:

| | |
|---|---|
| CO₂ | from 0.00 to 2.50 |
| Na₂O | 3.00 |
| MgO | from 0.30 to 1.00 |
| Al₂O₃ | from 10.00 to 11.00 |
| SiO₂ | from 61.00 to 80.00 |
| K₂O | from 0.00 to 4.50 |
| CaO | from 3.00 to 10.00 |
| Fe₂O₃ | 10.00 |
| Cr₂O₃ | 0.03 |
| TiO₂ | 0.20 |
| MnO | 0.080 |

so as to produce a granular bed 25 cm deep. A solution containing 5000 mg/l of hexavalent chromium was made to flow continuously through the bed.

An hourly flow-rate of 113 cm³ was obtained and, upon atomic absorption analysis, the percolate was found to contain 0.5 µg/l of trivalent chromium.

### EXAMPLES 4 and 5

Two cylindrical columns with cross-sections of 3.14 cm² were filled to a depth of 25 cm with the following solid compositions:
- composition A:: granite slurry 80%
marble slurry 20%
- composition B:: granite slurry 100%
produced by the preliminary partial drying of residues from the cutting of marble and granite, in the manner described in Example 1 above.

Table 2 below gives the results of the analysis of the compositions A and B (percentages by weight).

**TABLE 2**

| | COMPOSITION A | COMPOSITION B |
|---|---|---|
| P.C. | 6.5 | 2 |
| SiO₂ | 56.1 | 61.8 |
| Fe₂O₃ | 1.6 | 1.5 |
| Fe | 8.4 | 1.5 |
| Al₂O₃ | 11.2 | 12.6 |
| CaO | 10 | 5.5 |
| MgO | 0.6 | 0.2 |
| Na₂+K₂O | 5.6 | 6.5 |

A solution including various heavy metals and surfactants was made to percolate continuously through the granular beds thus obtained and was substantially purified. The results of analysis carried out on the solution and on the percolate obtained are summarised in Table 3 attached.

**TABLE 3**

| DETERMINATIONS | UNITS OF MEASUREMENT | SOLUTION SUPPLIED | COMPOSITION A | COMPOSITION B |
|---|---|---|---|---|
| Hydrogen-ion concentration | pH | 5.8 | | |
| Phosphates | mg/l P-PO | 10,000 | 12 | 12 |
| Surfactants | mg/l MBAS | 6 | 0.025 | 0.025 |
| Hexavalent chromium | mg/l Cr^{VI} | 5 | 0.1 | 0.1 |
| Zinc | mg/l | 10 | 0.03 | 0.03 |
| Lead | mg/l | 3 | 0.2 | 0.2 |
| Copper | mg/l | 3 | 0.05 | 0.05 |
| Cadmium | mg/l | 0.05 | 0.02 | 0.02 |

### EXAMPLE 6

A cylindrical column with a cross-section of 3.14 cm² was filled to a depth of 30 cm with a solid composition including:

| | |
|---|---|
| granite slurry | 80% by weight |
| granite chips | 20% by weight |

having the compositions given above.

The particle-size of the granite chips was 2-6 mm.

A solution containing AsCl₃ with a proportion of 4.2 parts per million of arsenic was filtered continuously through the granular bed obtained.

The flow-rate was about 30 cm²/day.

No traces of arsenic were found in the filtrate, by atomic absorption.

### EXAMPLE 7

A granular bed was placed in the same column, with the use of the solid composition of Example 3 above, to which a solution containing 4000 g/l of arsenic was supplied.

With a flow-rate of 113 cm³/hour, a solution was obtained which, upon atomic absorption analysis was found to contain a quantity of arsenic of less than 4 µg/l, the lower limit of the sensitivity of the instrument.

### EXAMPLE 8

A 2 kg sample of blast-furnace slag from the ILVA works of Terni, having the following composition:

| | |
|---|---|
| SiO₂ | 76% |
| Ca | 12% |
| Mg | 7% |
| Cr⁶⁺ | 0.5% |
| Cr³⁺ | 0.5% |
| Hg | 0.35% |
| Ni | 0.32% |
| Pb | 0.66% |
| Cu | 0.67% |
| Zn | 1.20% |

was subjected to washing.

The water collected, incorporating the metals given above in solution, was passed through a cylindrical column with a cross-section of 7.065 cm² which contained a granular bed 25 cm deep.

The washing water was then filtered in the following manner:

| | |
|---|---|
| head of water | 200 cm |
| rate of flow of the filtrate | 0.01 cm/s. |

No traces of any metal were found in the filtrate by atomic absorption.

### EXAMPLE 9

A sample of the granular bed from Example 8 above was subjected to washing to check for the release of any toxic substances incorporated.

The sample, which weighed 300 g, was washed for a period of time such as to simulate rainfall for 128 years at a rate of 1600 mm of rain annually.

Subsequent atomic absorption analysis showed no appreciable presence of chromium in the washing waters.

The same sample of material was then introduced into a stirred reactor and kept there for 24 hours in an acid solution with a pH of 4.5 due to sulphuric acid and nitric acid.

Upon completion of the test, the solution was analysed and, once again, no traces of pollutants were found.

### EXAMPLE 10

A granular bed of the solid composition including the granite chips of the preceding examples in a porportion of 100% was placed in a cylindrical column with a cross-section of 3.14 cm².

A solution containing 104 ppm of phenol was percolated through the granular bed at a flow-rate of 0.1 cm/s.

Upon atomic absorption, 2 ppm of phenol were found in the filtrate.

It can readily be seen from the foregoing that the solid composition of the present invention almost completely removes pollutants such as heavy metals, surfactants, phenolic organic compounds and the like present in an aqueous medium and, at the same time, produces a substantially inert solid residue.

The latter can then be used as a filling material in building applications, for forming base layers for paving, and for forming filtering layers in dumps for solid urban refuse.

A particularly advantageous application of the solid composition of the present invention is that which enables blast-furnace slag to be declassified from harmful toxic waste to special inert waste after it has been mixed with the solid composition or after the treatment of the water leached from the same slag.

The present invention also advantageously enables the reuse of materials which themselves constitute waste from operations in the marble or granite industries and which at present are difficult to dispose of.

## Claims

1. A solid composition for removing pollutants in solution from an aqueous medium which contains them and for subsequently rendering them inert, characterised in that it includes partially dried rock slurry having a moisture content of between 14 and 16% by weight.

2. A solid composition according to Claim 1, characterised in that the partially dried rock slurry has a pH of between 8 and 12.

3. A solid composition according to Claim 1, characterised in that it also includes granite chips having a particle size of between 2 and 6 mm.

4. A solid composition according to Claim 3, characterised in that it includes from 20 to 100% by weight of the partially dried rock slurry and from 0 to 80% by weight of granite chips.

5. A solid composition according to Claim 4, characterised in that it includes 20% by weight of partially dried rock slurry and 80% by weight of granite chips.

6. A solid composition according to any one of Claims 1-5, characterised in that it also includes up to 2% by weight of bentonite.

7. A method of removing pollutants in solution from an aqueous medium which contains them and subsequently rendering them inert, characterised in that it includes the step of placing the aqueous medium in intimate contact with a solid composition according to any one of Claims 1-6.

8. A method according to Claim 7, characterised in that the step is carried out by providing a granular bed comprising the solid composition and causing the aqueous medium to flow through the bed.

9. A method according to Claim 8, characterised in that the solid composition includes 80% by weight of granite chips and 20% by weight of rock slurry, the aqueous medium being made to flow through the bed at a rate no faster than 0.01 cm/s.

10. A method according to Claim 7, characterised in that the step is carried out by dispersing the solid composition in the aqueous medium.

11. A method according to Claim 10, characterised in that the solid composition is dispersed in a fluid-bed reactor or in a stirred reactor.
